# EUROPÄISCHE PATENTSCHRIFT

(11) **EP 2 550 929 B1**
(45) Veröffentlichungstag und Bekanntmachung des Hinweises auf die Patenterteilung: **01.04.2020**
(21) Anmeldenummer: 11175231.7
(22) Anmeldetag: 25.07.2011
(51) Int. Cl.: A61C 13/20, F27B 17/02, F27D 21/00

(54) **Dentalofen mit Muffelgrößenerkennung**
Dental furnace with muffle size recognition
Four dentaire avec identification de tailles de moufles

(43) Veröffentlichungstag der Anmeldung: 30.01.2013
(60) Teilanmeldung: 18205166.4
(73) Patentinhaber: Ivoclar Vivadent AG, 9494 Schaan (LI)
(72) Erfinder: Jussel, Rudolf, 6805 Feldkirch-Gisingen (AT); Gottfried, Rohner, 9450 Altstätten (CH)
(74) Vertreter: Baronetzky, Klaus

(56) Entgegenhaltungen:
- EP-A1- 1 978 321
- EP-A2- 2 026 054
- WO-A1-2005/116557
- DE-A1- 10 039 147
- DE-A1-102004 049 888
- JP-A- 2002 062 117
- US-A1- 2003 234 095

## Beschreibung

Die Erfindung betrifft einen Dentalofen und ein Verfahren zum Betrieb eines Dentalofens.

Dentalöfen für das Brennen von Dentalrestaurationsteilen sind seit langem bekannt. In derartigen Dentalöfen wird ein Dentalrestaurationsteil oder werden eine Mehrzahl von Dentalrestaurationsteilen einem Brennvorgang oder Sintervorgang unterworfen, und zwar nach einem genau vorgegebenen Temperaturprofil.

Die Qualität der erzeugten Dentalrestaurationsteile hängt wesentlich davon ab, dass die vorgesehenen und für das vorhandene Dentalrestaurationsmaterial optimal angepassten Parameter während des Brennens genau eingehalten werden. Hierzu gehören nicht nur das einzuhaltende Temperaturprofil, und zwar nicht im Inneren des Ofens, sondern am Dentalrestaurationsteil selbst, aber auch die bestehenden Unterdruckverhältnisse während des Brennzyklus.

Zu derartigen Dentalrestaurationsteilen gehören aus Kunststoff, aus Metall, aus Komposit, aber insbesondere auch aus Keramik herzustellende Dentalrestaurationsteile.

Keramische Dentalrestaurationsteile werden häufig in sogenannten Muffeln hergestellt, in denen Hohlformen der exakten Form des späteren Dentalrestaurationsteils als Negativabdruck entsprechen. Derartige Modelle werden als Positivmodelle aus Wachs oder ähnlichem hergestellt, über sogenannte Anwachskanäle auf einer gemeinsamen Basis befestigt und dann abgegossen, mit einem formtreu abbindenden und meist gipshaltigen Material.

Nach Ausschmelzen des Wachses stehen Hohlräume zur Verfügung, wobei die Anwachskanäle über einen gemeinsamen und meist zylindrisch ausgebildeten Presskanal miteinander verbunden sind, und die an den Hohlräumen enden, in denen die Dentalrestaurationsteile erzeugt werden sollen.

Wenn ein Dentalrestaurationsteil gepresst werden soll, wird ein Grünling oder Pressling in den Presskanal eingesetzt, und von einem Pressstempel unter Druck gesetzt. Bei Erwärmung auf die Sinterungstemperatur der Keramik, aus der der Pressling besteht, beginnt sich der Pressling zu verflüssigen und wird durch Druck auf den Presstempel in die Formhohlräume zur Erzeugung von Dentalrestaurationsteilen eingebracht.

Dieses Verfahren ist seit langem bekannt, wobei in neuerer Zeit versucht wird, den Durchsatz dentaler Pressöfen zu verbessern, beispielsweise, indem mehrere oder größere Dentalrestaurationsteile gemeinsam in einer Muffel gepresst werden.

Größere Formhohlräume oder eine größere Anzahl von Formhohlräumen bedingt jedoch eine gewisse Schwächung der Muffel. Daher müssen die Ofenparameter zur Vermeidung von Rissbildungen in der Muffel oder anderen Schädigungen der Dentalrestaurationsteile noch genauer eingehalten werden.

Es ist auch bereits vorgeschlagen worden, wie es aus der DE 10 2006 050 830 A1 ersichtlich ist, zu überwachen, ob die unter Druck stehende Muffel beim Pressen einen Riss zeigt. Diese Erkennung kann jedoch jeweils im Grunde erst im Nachhinein erfolgen, und es wäre wünschenswert, bereits vorab Muffelrisse sicher zu vermeiden.

Um mit einer gewissen Sicherheitsmarge dies zu gewährleisten, werden die erzeugten Muffeln mit einer vorgegebenen und vom Benutzer einzustellenden Presskraft beaufschlagt, die deutlich unterhalb derjenigen Presskraft liegt, bei der Risse auftreten können.

Eine reduzierte Presskraft bietet jedoch andererseits das Risiko, dass die dentalen Restaurationsteile zu lange im Brennofen verbleiben müssen, damit die Formhohlräume vollständig ausgefüllt sind, aber auch das Risiko, dass versehentlich vom Benutzer der Pressvorgang abgebrochen wird, weil der Benutzer davon ausgeht, dass der Pressvorgang abgeschlossen ist, etwa, wenn sich der Pressstempel nicht weiter nach unten bewegt. Dies kann insbesondere dann geschehen, wenn eine vergleichsweise hohe Reibung im Schaft vorliegt. Ein mit reduzierter Presskraft betriebener Dentalofen ist anfälliger für derartige Reibungsfehler als ein mit hoher Presskraft betriebener Dentalpressofen.

Ein weiteres Qualitätsproblem liegt darin begründet, dass versehentlich falsche Parameter für den vorzunehmenden Brennvorgang und/oder Pressvorgang eingestellt werden. Dies kann dazu führen, dass eine zu hohe oder eine zu geringe Presskraft, oder eine zu hohe oder zu geringe Brenntemperatur eingestellt wird. Das erzeugte Dentalrestaurationsteil ist dann - meist unerkannt - von schlechter Qualität, ohne dass dies an dem fertigen Dentalrestaurationsteil ohne Weiteres erkennbar wäre. Schäden ergeben sich in diesem Fall verschiedentlich erst nach jahrelanger Benutzung im Mund des Patienten, was dem Zahnarzt oder dem Hersteller des Dentalrestaurationsmaterials angelastet wird, auch wenn tatsächlich der Zahntechniker, der den Pressofen bedient hat, einem Irrtum unterlegen ist.

In großen Dentallabors wird häufig arbeitsteilig gearbeitet, so dass bestimmte Zahntechniker bestimmte Arbeiten mit vorgegebenen Parametern vornehmen, die aber auch durchaus einmal an den gleichen Brennöfen, die meist auf Wunsch des Kunden ein recht großes Spektrum abdecken, realisiert werden können. Um insofern den Bereich der Parameterwerte für die erforderliche dentaltechnische Arbeit einzugrenzen, ist es bereits vorgeschlagen worden, sogenannte Benutzerprofile zu erstellen, die es erfordern, dass der jeweilige Benutzer sich bei dem Dentalofen anmeldet und ihm dann innerhalb seines Spektrums zur Wahl stehende Brennkurven und Presskurven angeboten werden. Eine richtige Zuordnung bedingt jedoch, dass sich der Benutzer nach Beendigung seiner Tätigkeit an dem betreffenden Brennofen auch abmeldet, was als umständlich empfunden wird, so dass zu befürchten ist, dass ein anderer Benutzer unbesehen ein Fehlbedienung durchführt, in der Annahme, dass der betreffende Dentalofen ihm die "richtigen" Brennkurven und Presskurven zur Auswahl vorlegt.

Die Druckschrift EP1978321A1 offenbart einen Dentalofen, mit einem Brennraum und wenigstens einer für in den Brennraum einbringbaren Trägervorrichtung für Dentalmaterial, insbesondere einer Muffel, und insbesondere einer Pressvorrichtung zum Verpressen eines in der Muffel eingesetzten Keramikrohlings, wobei wenigstens eine physikalische Größe des Brennraums und/oder der Trägervorrichtung und/ oder des Keramikrohlings erfasst wird. Auf der erfassten physikalischen Größe basiert ist ein Verarbeitungsprogramm des Dentalofens einstellbar. Demgegenüber liegt der Erfindung die Aufgabe zugrunde, einen Dentalofen und ein Verfahren zu schaffen, mit welchem die Arbeit im Dentallabor auch bei komplexen Anforderungen und hohen Qualitätserwartungen der Benutzer verbessert wird, ohne dass die Bedienung der Dentalöfen über das in der Praxis relevante Maß hinaus kompliziert würde.

Diese Aufgabe wird erfindungsgemäß durch Anspruch 1 bzw. Anspruch 13 gelöst. Vorteilhafte Weiterbildungen ergeben sich aus den Unteransprüchen.

Erfindungsgemäß wird ein optischer Sensor eingesetzt, um bestimmte für den Betrieb des Dentalofens relevante Gegebenheiten zu erfassen und basierend auf dem Erfassungsergebnis den Dentalofen entsprechend zu steuern. Hierbei sei unter "optischer Sensor" eine Aneinanderreihung von gleichartigen oder im Wesentlichen gleichartigen strahlungsempfindlichen Elementen zu verstehen.

Bei Aneinanderreihung in einer Dimension kann ein derartiger optischer Sensor auch durch eine Reihe von einzelnen Sensorlementen gebildet werden, zu denen beispielsweise auch Infrarotsensoren gehören können, bei einer Aneinanderreihung der einzelnen Sensorelemente in zwei Dimensionen ist hingegen auch eine Bilderfassung und Abbildung in diesen beiden Dimensionen möglich, wie es beispielsweise durch einen CCD-Einheit einer Digitalkamera realisierbar ist. Bei Realisierung als CCD-Einheit kann in vorteilhafter Ausgestaltung auch eine sogenannte Wärmebildkamera realisiert werden, die ihr Empfindlichkeitsmaximum im Infrarotbereich hat, oder als Digitalkamera für den Bereich des sichtbaren Lichts, also zwischen 300 nm und 750 nm.

Erfindungsgemäß besonders günstig ist es, dass mit der erfindungsgemäßen Ausgestaltung des Dentalofens mit optischem Sensor berührungslos gemessen werden kann. Es kann beispielsweise die Größe eines dentalen Restaurationsteils, eines Presskolbens, einer Muffel, oder eines Brenngutträgers gemessen werden, je dessen Form oder auch je dessen Position. Auch ist mit dem optischen Sensor, der durchaus in seinem Messbereich in Infrarotbereich hineinreichen kann, eine Temperaturmessung möglich, und es ist auch möglich, das Messergebnis über größere Distanzen zu übertragen. Mechanische Verformungen oder sonstige Fälschungen beeinflussen die Messung nicht.

Bei der in vorteilhafter Ausgestaltung vorgesehenen Überwachung ist über eine Anzeigevorrichtung oder in sonstiger geeigneter Form eine Kontrolle des Dentalofens durch den Benutzer möglich. Wenn der optische Sensor auf das Dentalrestaurationsteil oder die Muffel gerichtet ist, erkennt die Steuervorrichtung auch ohne weiteres, wenn die Muffel bzw. das Dentalrestaurationsteil eingebracht wird und entfernt wird.

Dies gilt auch für Brenngutträger, und es kann beispielsweise nach der Farbe erfasst werden, ob der richtige Brenngutträger eingesetzt ist.

Die Überwachung ist nicht auf die Muffel beschränkt. Beispielsweise kann auch die Position eines Aluminiumoxid-Kolbens oder Pressstempels in der Muffel überwacht werden. Dieser muss bekanntlich nach der Pressung tiefer in die Muffel eingetaucht sein, was sich über eine Positionsbestimmung erfassen lässt.

Erfindungsgemäß ist es vorgesehen, dass mit dem optischen Sensor eine Steuervorrichtung für den Dentalofen angesteuert wird. Die Steuervorrichtung löst dann in Abhängigkeit von dem erfassten Bild oder sonstigem Signalausgang, wie er von dem optischen Sensor übermittelt wird, die gewünschte Funktion aus.

So ist es bei entsprechend hoch auflösender Auslegung der CCD-Einheit möglich, das zu behandelnde Objekt zu erkennen. Dieses kann beispielsweise ein zu brennendes Dentalrestaurationsteil sein, und die Steuervorrichtung löst dann das zugehörige Programm aus. Es ist auch möglich, die diesbezügliche Erkennung unterstützt vorzunehmen, also beispielsweise mit Hilfe von Strichcodes auf der Verpackung des Produkts. Es ist jedoch bevorzugt, dass der optische Sensor das Objekt unmittelbar erkennt und die erwünschte Programmfunktion auslöst.

Beispielsweise kann durch Bildauswertung die Größe eines zu brennenden Dentalrestaurationsteils erkannt werden und die entsprechenden Parameter festgelegt werden.

Eine weitere Möglichkeit besteht in der automatischen Identifikation von Muffeln. Deren Größe, Chargennummer oder dergleichen kann erkannt werden und die Ofensteuerung in geeigneter Weise angepasst werden.

Der erfindungsgemäße optische Sensor kann entweder fest mit dem Gehäuse oder dem Unterteil des Dentalofens verbunden sein, oder über eine geeignete Verbindung, wie beispielsweise eine drahtlose Verbindung, ein elektrisches Kabel oder dergleichen, mit der Steuervorrichtung des Dentalofens verbunden sein.

In vorteilhafter Ausgestaltung der Erfindung ist der erfindungsgemäße optische Sensor als Mehrfachanordnung von einzelnen lichtempfindlichen Elementen in einer Reihe vorgesehen und speziell darauf abgestimmt, den Durchmesser einer Muffel zu erkennen. Hierzu erstreckt sich die Anordnung mit lichtempfindlichen Elementen des optischen Sensors bevorzugt horizontal, entsprechend der vertikalen Aufstellrichtung einer Muffel in einem Dentalofen. Es ist auch möglich, eine an sich bekannte Temperaturmesskamera einzusetzen, und lediglich eine Zeile der dort vorgesehenen Matrix auszuwerten. Jedes Erfassungselement entspricht insofern dann einem Pixel. Die Anzahl der Pixel, auf die optische Strahlung oder Wärmestrahlung von der Muffel trifft, lassen bzw. lässt Rückschlüsse über den Durchmesser der Muffel zu. Die erwünschte Genauigkeit ist bereits ausreichend, wenn eine Pixelbreite einem Durchmesserunterschied von beispielsweise 4 mm entspricht.

Basierend auf dem insofern vorliegenden Messergebnis wird die Steuervorrichtung mit der diesbezüglichen Information versorgt, und steuert den Ofen in geeigneter Weise an, beispielsweise, indem für Muffeln mit größerem Durchmesser ein längerer Brennzyklus ausgewählt wird.

In vorteilhafter Ausgestaltung ist es vorgesehen, nicht nur den Durchmesser der Muffel, sondern auch die Höhe der Muffel auszuwerten. Hierzu ist entweder eine zweidimensionale Erfassung der Muffelumrisse über der erfindungsgemäße optische Sensor vorgesehen. In alternativer Ausgestaltung ist es vorgesehen, eine Pixelzeile der CCD-Einheit - wie vorstehend beschrieben - auszuwerten, sowie eine Pixelspalte der Einheit. Hierbei ergibt sich aus der Auswertung der Pixelspalte dann die Höhe der Muffel und aus der Pixelbreite der Durchmesser.

Es versteht sich, dass der optische Sensor eine vorgegebenen Position bezogen auf die Muffel einnimmt. Beispielsweise kann die Muffel an einer vorgegebenen Vertiefung im Brennkammerboden abgestellt werden, und der optische Sensor kann fest montiert an dem Ofenunterteil auf die Muffel ausgerichtet sein.

In vorteilhafter Ausgestaltung ist es vorgesehen, dass die Formatwahl des optischen Sensors an die Erfordernisse anpassbar ist. Wenn beispielsweise in vertikaler Richtung die Pixelauflösung größer als in horizontaler Richtung ist, bietet sich die Bildauswertung eines hochkant stehenden Bildes an. Wenn umgekehrt die Pixelanzahl in horizontaler Richtung größer als in vertikaler Richtung ist, steht für die Auswertung in horizontaler Richtung eine höhere Auflösung zur Verfügung, so dass auch nebeneinander angeordnete Objekte, wie beispielsweise flach liegende mehrgliedrige Kronen gut ausgewertet werden können.

In an sich bekannter Weise ist es möglich, den Bildausschnitt über eine ebenfalls an sich bekannte Zoomoptik zu vergrößern oder zu verkleinern.

In vorteilhafter Ausgestaltung ist es vorgesehen, dass die Steuervorrichtung eine Vergleichsvorrichtung aufweist, die abgespeicherte Bilder mit den erfassten Bildern des optischen Sensors vergleicht. Hierzu gehören beispielsweise bestimmte Muffelgrößen, oder auch bestimmte Größen von Dentalrestaurationen.

Gemäß einer weiteren vorteilhaften Ausgestaltung ist es vorgesehen, dass die Auswertevorrichtung mit einer Anzeigevorrichtung verbunden ist, mit welcher Informationen über die Abmessung und/oder die Form und/oder Position anzeigbar sind, und/oder mit einer Steuervorrichtung für die Steuerung des Dentalofens.

Gemäß einer weiteren vorteilhaften Ausgestaltung ist es vorgesehen, dass eine Überwachungsvorrichtung des Dentalofens an den Sensor angeschlossen ist, mit welcher eine zeitliche Veränderung der Abmessung und/oder Form und/oder Position erfassbar ist.

Gemäß einer weiteren vorteilhaften Ausgestaltung ist es vorgesehen, dass der Sensor einen Erfassungsbereich aufweist, der sich mindestens teilweise im Brennraum oberhalb des Brennraumbodens des Dentalofens erstreckt und durch den sich insbesondere auch die Mittellängsachse des Brennraums erstreckt.

Gemäß einer weiteren vorteilhaften Ausgestaltung ist es vorgesehen, dass der Ofenkopf in an sich bekannter Weise von dem Brennraumboden entfernbar, insbesondere gegenüber diesem anhebbar ist oder der Brennkammerboden absenkbar ist und der Sensor auf einen Erfassungsbereich gerichtet ist, der sich zwischen dem Brennraumboden und dem Ofenkopf im geöffneten Zustand des Ofens erstreckt.

Gemäß einer weiteren vorteilhaften Ausgestaltung ist es vorgesehen, dass der Sensor schwenkbar gelagert ist, insbesondere schwenkbar an dem Dentalofen befestigt ist.

Gemäß einer weiteren vorteilhaften Ausgestaltung ist es vorgesehen, dass der Sensor als Bilderfassungsvorrichtung ausgebildet ist, mit welcher ein Bild der Dentalrestaurationen und/oder der Muffel und/oder des Presskolbens und/oder des Brenngutträgers aufnehmbar ist.

Gemäß einer weiteren vorteilhaften Ausgestaltung ist es vorgesehen, dass der Sensor als Bilderfassungsvorrichtung ausgebildet ist, die das aufgenommene Bild zeilenweise und/oder spaltenweise auswertet und basierend auf dem Auswertungsergebnis in einer parallel zum Brennraumboden verlaufenden Breite oder einer vertikal zum Brennraumboden verlaufenden Höhe des Dentalrestaurationsteils und/oder der Muffel und/oder des Presskolbens und/oder des Brenngutträgers deren Abmessungen bestimmt, insbesondere durch Bestimmung der Anzahl von Pixeln, die der Breite bzw. Höhe des erfassten Gegenstands entsprechen, wobei die Anzahl der Pixel durch Vergleich der dem Gegenstand entsprechenden Pixel gegenüber den dem Hintergrund entsprechenden Pixeln basierend auf einem vorgegebenen Kriterium realisiert ist.

Gemäß einer weiteren vorteilhaften Ausgestaltung ist es vorgesehen, dass es sich bei dem angesprochenen Kriterium um die Temperatur, die Helligkeit und/oder die Farbe des Gegenstandes handelt.

Gemäß einer weiteren vorteilhaften Ausgestaltung ist es vorgesehen, dass der Sensor elektromagnetische Wellen in einem Wellenlängenbereich zwischen 380 nm und 18 µm erfasst und insbesondere eine Vielzahl von Sensorelementen aufweist.

Gemäß einer weiteren vorteilhaften Ausgestaltung ist es vorgesehen, dass der optische Sensor wenigstens zwei Sensorelemente aufweist, die im Winkel zueinander versetzt angeordnet sind und insbesondere je Erfassungsbereiche aufweisen, die einander mindestens teilweise überlappen.

Erfindungsgemäß ist es vorgesehen, dass der optische Sensor Teil einer Lichtschranke ist, die insbesondere mindestens zwei Sensorelemente aufweist und mindestens einen Sender elektromagnetischer Strahlen, dessen Vorhandensein von den Sensorelementen erfassbar ist.

Erfindungsgemäß ist es vorgesehen, dass der Sensor an eine Steuervorrichtung angeschlossen ist, über welche ein Dentalrestaurationsteil oder eine Muffel hinsichtlich seiner Größe erkennbar ist, und dass die Steuervorrichtung Ofenparameter in Abhängigkeit von der Größe des Dentalrestaurationsteils festlegt, insbesondere in Abhängigkeit von der so erfassten Muffelbreite.

Erfindungsgemäß ist ein Verfahren zum Betrieb eines Dentalofens vorgesehen, welcher Dentalofen einen Ofenkopf und einen Brennraumboden aufweist, der für die Aufnahme eines Dentalrestaurationsteils geeignet ist, dadurch gekennzeichnet, dass wenigstens ein optischer Sensor an dem Dentalofen oder in dessen Nähe angeordnet ist, welcher ein Bild der Dentalrestauration und/oder der Muffel und/oder eines Presskolbens und/oder eines Brenngutträgers aufnimmt und an eine Steuervorrichtung weiterleitet, und dass basierend hierauf der Dentalofen gesteuert und/oder das Bild angezeigt wird.

Weiterhin ist es vorgesehen, dass die Steuerung eine Vorauswahl an Bearbeitungsprogrammen des Dentalofens umfasst, nachdem die Steuervorrichtung den erfassten Gegenstand erkannt hat, insbesondere die Größe einer auf dem Brennraumboden abgestellten Muffel.

Gemäß einer weiteren vorteilhaften Ausgestaltung ist es vorgesehen, dass die Temperatur des Dentalrestaurationsteils und/oder der Muffel und/oder des Presskolbens und/oder des Brenngutträgers von dem Sensor erfassbar ist und die Steuervorrichtung den Dentalofen in Abhängigkeit von der erfassten Temperatur steuert.

Weitere Vorteile, Einzelheiten und Merkmale mehrerer Ausführungsbeispiele ergeben sich aus der nachstehenden Beschreibung der Erfindung.

Es zeigen:
- Fig. 1: eine schematische Ansicht einer Ausführungsform eines Details eines erfindungsgemäßen Dentalofens;
- Fig. 2: eine schematische Ansicht eines Details des optischen Sensors zu Fig. 1;
- Fig. 3: eine schematische Ansicht einer weiteren Ausführungsform eines Teils eines erfindungsgemäßen Dentalofens;
- Fig. 4a bis Fig 4f: schematische Ansichten von Muffeln, die für eine Ausführungsform eines erfindungsgemäßen Dentalofens bestimmt sind;
- Fig. 5: eine weitere schematisch dargestellte Ausführungsform eines erfindungsgemäßen Dentalofens;
- Fig. 6: eine weitere schematisch dargestellte Ausführungsform eines erfindungsgemäßen Dentalofens, in der Darstellung mit geöffneter Ofenhaube;
- Fig. 7: eine weitere schematisch dargestellte Ausführungsform eines erfindungsgemäßen Dentalofens;
- Fig. 8: eine schematische Darstellung eines erfindungsgemäßen optischen Sensors im Betrieb;
- Fig. 9: eine schematische Darstellung eines erfindungsgemäßen optischen Sensors, jedoch in einer modifizierten Ausgestaltung;
- Fig. 10: eine schematische Draufsicht auf eine teilweise dargestellte weitere Ausführungsform eines erfindungsgemäßen Dentalofens; und
- Fig. 11: eine schematische perspektivische Ansicht auf eine teilweise dargestellte Ausführungsform eines erfindungsgemäßen Dentalofens;

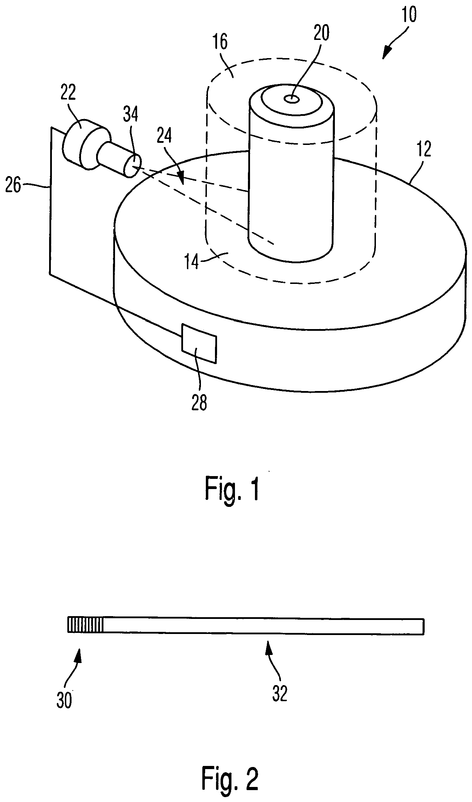

Ein erfindungsgemäßder Dentalofen 10 weist einen Brennraumboden 12 auf, der dafür bestimmt ist, eine Muffel 14 aufzunehmen. Für das Brennen ist die Muffel 14 in einem in Fig. 1 schematisch und gestrichelt angedeuteten Brennraum 16 aufgenommen, der in einer nicht dargestellten Ofenhaube ausgebildet ist.

In dem in Fig. 1 dargestellten Zustand ist die Ofenhaube (einschließlich des Brennraums 16) jedoch angehoben, so dass die Muffel 14 einsehbar ist.

In die Muffel 14 ist in an sich bekannter Weise dafür bestimmt, Dentalrestaurationsteile auszubilden. Hierzu weist sie einen Presskanal 20 auf, der für die Aufnahme eines Presskolbens bestimmt ist. Im Inneren der Muffel 14 sind in ebenfalls an sich bekannter Weise Formhohlräume ausgebildet, die die Dentalrestaurationsteile in ihrer Form festlegen. Erfindungsgemäß ist seitlich des Brennraums, jedoch knapp über diesem, ein optischer Sensor 22 angeordnet. Der optische Sensor 22 ist in dem dargestellten Ausführungsbeispiel auf die Muffel 14 ausgerichtet, und ihr Erfassungsbereich 24 deckt die maximal mögliche Größe einer Muffel in dem Brennraum 16 ab. In an sich bekannter Weise ist der Erfassungsbereich 24 des optischen Sensors 22 hierzu im Wesentlichen kegelförmig. Der optische Sensor 22 erfasst damit die Breite der Muffel 14, und in vorteilhafter Ausgestaltung auch die Höhe der Muffel 14.

Der optische Sensor weist einen Ausgangsanschluss 26 auf, der über eine beliebige dafür geeignete Leitung mit einer Steuervorrichtung 28 für den Dentalofen verbunden ist. Die Steuervorrichtung 28 steuert den Dentalofen so, wie es für die erfasste Muffel 14 optimal ist. Wenn beispielsweise eine größere Muffel 14 erkannt wird, verlängert sich der Brennzyklus automatisch, um insofern der erhöhten Wärmekapazität der Muffel Rechnung zu tragen und um ein gleichbleibendes Dentalrestaurationsergebnis zu erzielen.

In an sich bekannter Weise ist in der Steuervorrichtung hierzu eine Bilderkennungsvorrichtung vorgesehen, die das von dem optischen Sensor erkannte und erfasste Bild auswertet und die Größe der erfassten Muffel insofern als Beurteilungsmaßstab zugrunde legt.

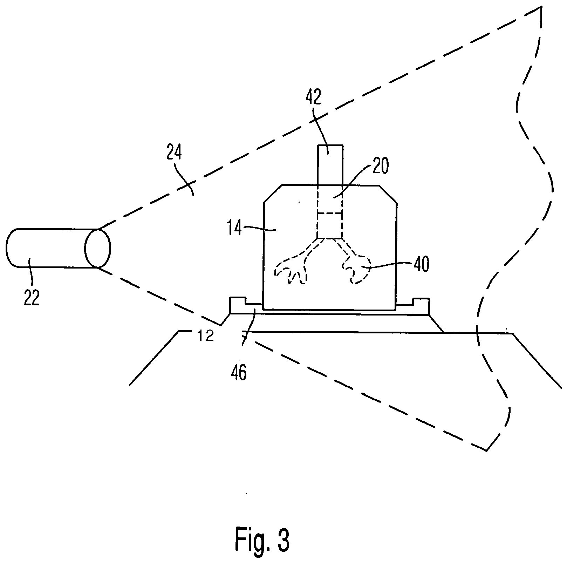

Auch wenn wir eine Muffelgrößenerkennung innerhalb des Dentalofens oder, genauer gesagt, oberhalb des Dentalofen-Unterteils vorgesehen ist, versteht es sich, dass in äquivalenter Weise eine Muffelgrößenerkennung auch außerhalb des Dentalofen-Unterteils vorgesehen werden kann. In bevorzugter Ausgestaltung der Erfindung ist es möglich, die Auswertung sowohl an der Stelle gemäß Fig. 1 vorzunehmen, als auch außerhalb. Hierzu kann der optische Sensor 22 entweder fest montiert sein, oder separat von dem Dentalofen 10 gelagert sein. Wie dies erfolgen kann, ist schematisch aus Fig. 3 ersichtlich.

In Fig. 2 ist die schematische Aneinanderreihung von Einzelerfassungselementen 30 der lichtempfindlichen Einheit in des optischen Sensors 22 ersichtlich. Wie ersichtlich ist, ist eine Vielzahl von Einzel-Erfassungselementen 30 aneinander angereiht, wobei die minimal erforderliche Auflösung - entsprechend der Anzahl der Einzel-Erfassungselemente - in weiten Bereichen an die Erfordernisse anpassbar ist. Die lichtempfindliche Einheit 32 gemäß Fig. 2 kann auch Teil einer CCD-Einheit sein, die nach der Art einer Matrix in des optischen Sensors 22 ausgebildet ist. In diesem Falle wird lediglich eine Zeile der CCD-Matrix ausgewertet.

Die Einzel-Erfassungselemente 30 gemäß Fig. 2 erkennen durch eine Optik 34 des optischen Sensors hindurch, welche Breite bzw. welchen Durchmesser die Muffel 14 hat. Hierzu ist die Belichtung der von der Muffel 14 beaufschlagten Einzel-Erfassungselemente 30 anders als diejenige der nicht beaufschlagten. Die Anzahl der beaufschlagten Erfassungselemente 30 entspricht dem Muffeldurchmesser und wird der Steuervorrichtung 28 signalisiert.

Aus Fig. 3 ist ersichtlich, in welcher Weise eine Muffel von dem optischen Sensor 22 erfasst werden kann. Der optische Sensor 22 weist einen Erfassungsbereich 24 auf, der sich im Wesentlichen kegelig in an sich bekannter Weise von dem optischen Sensor 22 nach vorne, also zur Muffel 14 hin erstreckt. Wie aus Fig. 3 ersichtlich ist, ist in der Muffel 14 ein Hohlraum für ein Dentalrestaurationsteil 40 vorgesehen, wobei in den dargestellten Ausführungsbeispielen mehrere Hohlräume verwirklicht sind.

Ein Pressstempel 42 liegt ebenfalls innerhalb des Erfassungsbereichs 24 und lässt sich insofern ebenfalls von dem optischen Sensor 22 erfassen. Damit lässt sich mit dem optischen Sensor 22 auch erfassen, in welchem Maße der Pressstempel 22 bereits in die Muffel 14 eingeschoben worden ist.

Die Muffel 14 ist gemäß Fig. 3 auf einem Brennraumboden 12 abgestellt. Der Brennraumboden weist in an sich bekannter Weise eine Vertiefung zur passgenauen Aufnahme der Muffel 14 auf. Für die Aufnahme von Muffeln unterschiedlichen Durchmessers sind mehrere Vertiefungen abgestuft vorgesehen, die je an die möglichen Muffelgrößen angepasst sind und mit denen sichergestellt ist, dass die Muffel zentriert abgestellt ist.

Der Erfassungsbereich 24 des optischen Sensors 22 erstreckt sich nicht nur in vertikaler Richtung, sondern insbesondere auch in horizontaler Richtung. Damit ist es auch möglich, die Position, aber auch die Breite der Muffel 14 zu erfassen. Wenn also beispielsweise die Muffel zu weit seitlich, also nicht zentriert in der Vertiefung, abgestellt ist, was zu Fehlpressungen führen könnte, lässt sich dies durch den optischen Sensor 22 ebenfalls erfassen.

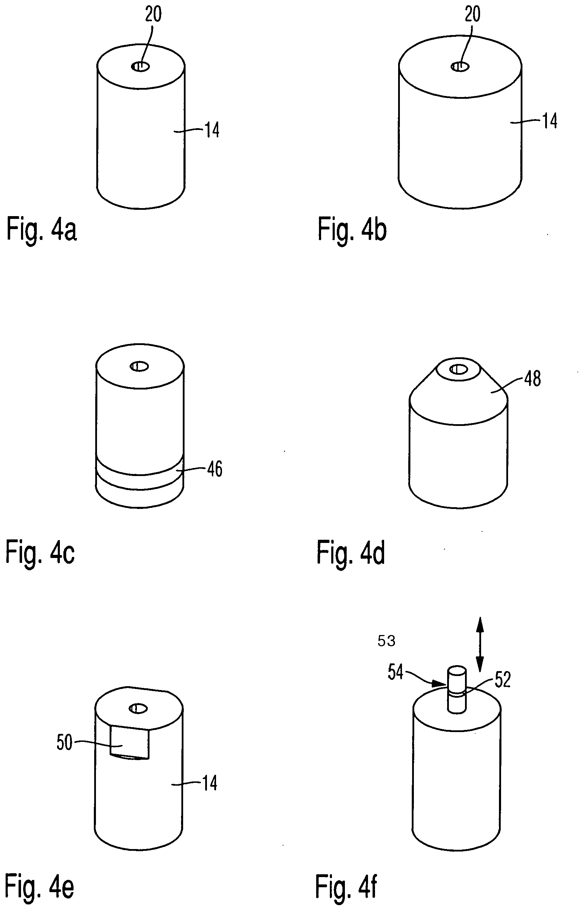

Wie aus den Fig. 4a bis 4f ersichtlich ist, können verschiedene Muffelformen je klassifiziert und beurteilt werden, um das passende Programm für den Dentalofen 10 auszuwählen. Fig. 4a unterscheidet sich von Fig. 4b dadurch, dass die Muffel gemäß Fig. 4a einen deutlich geringeren Durchmesser aufweist, jedoch den gleichen Presskanal-Durchmesser. Die Wärmekapazität der Muffel 14 gemäß Fig. 4b ist typischerweise gegenüber derjenigen gemäß Fig. 4a wesentlich größer, und es empfiehlt sich eine rasche Aufheizung mit einer Temperaturvergleichmäßigungsphase, während welcher ein Temperaturausgleich in der Muffel 14 stattfinden kann.

Gemäß Fig. 4c ist eine Muffel vorgesehen, die einen Markierungsring 46 trägt. Der Markierungsring 46 erlaubt z.B. Rückschlüsse über das verwendete Dentalmaterial wie beispielsweise Lithiumdisilikat oder Leuzit, und beeinflusst daher maßgeblich die Presskurve.

Gemäß Fig. 4d ist eine Muffel mit einer Abschrägung 48 an dem oberen Ende vorgesehen. Eine derartige Muffel erlaubt eine Hub-/Schwenkbewegung auch bei einem Brennraum, dessen Durchmesser nur knapp größer als der Muffelaußendurchmesser ist.

Eine andersartige Markierung 50 ist als Abflachung vorgesehen, die die dort dargestellte Muffel 14 von anderen Muffeln unterscheidet.

Auch ein Presskolben 52, der in den Presskanal 20 einbringbar ist, kann in beliebiger geeigneter Weise eine Markierung 53 aufweisen, die von dem erfindungsgemäßen optischen Sensor 22 erfassbar ist.

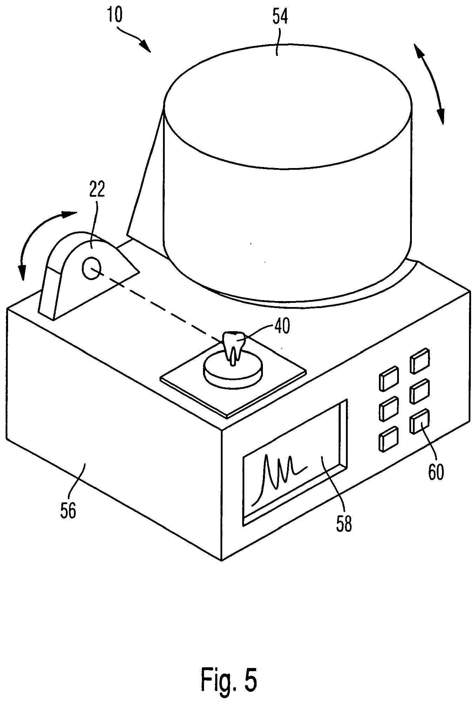

Der in Fig. 5 dargestellte Dentalofen 10 weist einen optischen Sensor 22 auf, der auf das neben einer Ofenhaube 54 abgestellt ist, und zwar in an sich bekannter Weise auf einem Ofenunterteil 56. Wie aus Fig. 5 schematisch ersichtlich ist, ist der optische Sensor 22 um eine nicht dargestellte vertikale Achse schwenkbar, so dass er bei geöffneter Ofenhaube auch auf den Brennraum ausgerichtet werden kann und ein dort abgestelltes Dentalrestaurationsteil 40 oder eine Muffel erkennen kann.

In an sich bekannter Weise weist der Dentalofen 10 gemäß Fig. 5 eine Anzeigevorrichtung 58 sowie Bedientasten 60 auf, und die Ofenhaube 54 ist um eine horizontale Achse schwenkbar oder anhebbar gelagert.

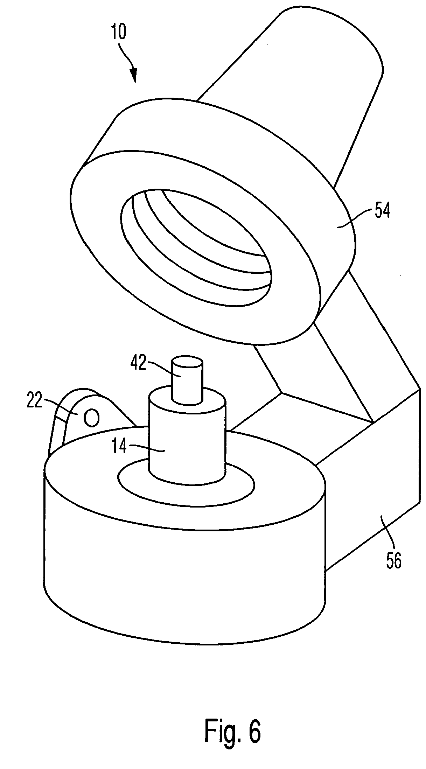

Die Ausgestaltung gemäß Fig. 6 zeigt ebenfalls eine Ausführungsform eines erfindungsgemäßen Dentalofens 10 mit Ofenhaube 54. Die Ofenhaube 54 ist so ausgebildet, dass sie für die in maximal mögliche Größe der Muffel 14 geeignet ist. Der optische Sensor 22 ist seitlich an dem Ofenunterteil 56 befestigt und zur Muffel 14 hin ausgerichtet. Der Erfassungsbereich des optischen Sensors erlaubt es, festzustellen, dass die Muffel 14 nicht die zulässige Größe überschreitet, aber auch, dass sie nicht an einer Stelle positioniert ist, die beim Schließen der Ofenhaube 54 mit deren Innenseite kollidieren würde.

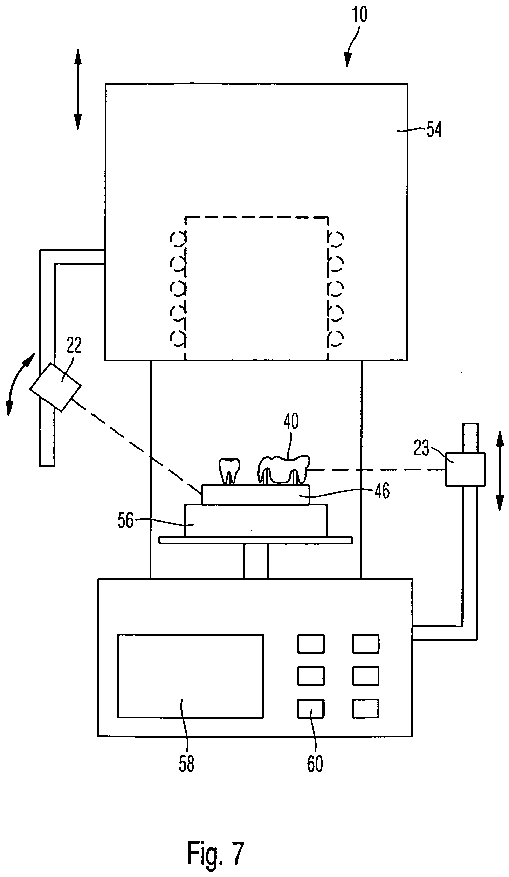

Eine modifizierte Version eines Dentalofens 10 mit einem vertikal absenkbaren Ofenunterteil 56 ist aus Fig. 7 ersichtlich. Bei dieser Ausgestaltung sind zwei optische Sensoren 22 und 23 vorgesehen, die beide zum Brennraumboden bzw. etwas oberhalb des Brennraumbodens gerichtet sind, um dort abgelegte Dentalrestaurationsteile 40 erfassen zu können. Hierbei ist der optische Sensor 23 vertikal verfahrbar und der optische Sensor 22 schwenkbar, je, um die erwünschten Informationen über die dentalen Restaurationsteile und deren Anordnung auf dem Brennraumboden 46 bestmöglich erfassen zu können.

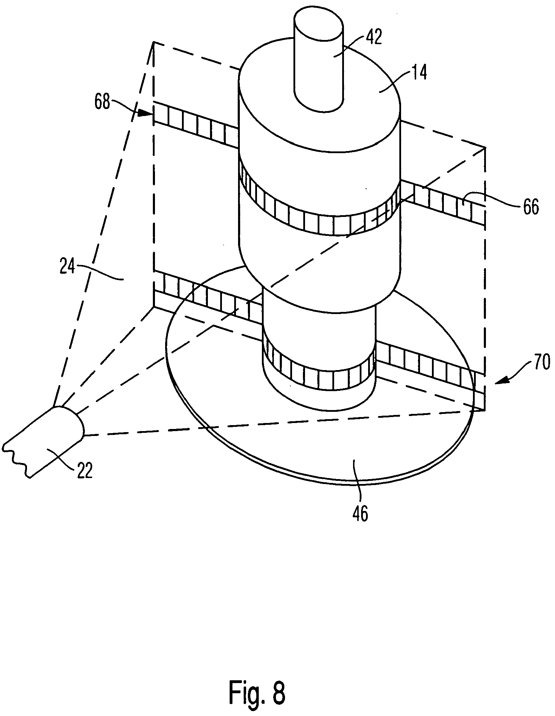

In Fig. 8 ist dargestellt, in welcher Weise sich der Erfassungsbereich 24 des optischen Sensors über eine Muffel 14 hinaus erstrecken kann. Der optische Sensor 22 erfasst in horizontaler Richtung die Breite der Muffel 14. Hierzu werden in an sich bekannter Weise eine Vielzahl von Pixeln 66 ausgewertet, und zwar in dem dargestellten Ausführungsbeispiel an einer oberen vertikalen Position 66 und an einer unteren vertikalen Position 70. Durch den Vergleich der ermittelten Pixelwerte lässt sich auch die Form der Muffel 14 grob bestimmen.

Es versteht sich, dass der optische Sensor darauf abgestellt ist, die Reflexionseigenschaften der Muffel 14 mit den Refelxionseigenschaften des Hintergrundes zu vergleichen und Unterschiede festzustellen. Typischerweise ist beispielsweise eine Muffel weiß, und ein Hintergrund weisst typischerweise eine andere Farbe als weiß auf. Damit ist eine Unterscheidung auch dann möglich, wenn lediglich der Bereich sichtbaren Lichts von dem optischen Sensor 22 ausgewertet wird.

In modifizierter Ausgestaltung wird jedoch anstelledessen oder darüber hinaus auch Infrarotstrahlung ausgewertet. Dies ermöglicht die Erfassung der einer heißen Muffel, die sie beispielsweise aus einem Vorwärmofen stammt und auf dem Brennraumboden 46 abgestellt wird.

Gegenüber der beispielsweise 600 °C heissen Muffel ist die Umgebung deutlich kälter, so dass eine besonders gute Unterscheidung möglich ist.

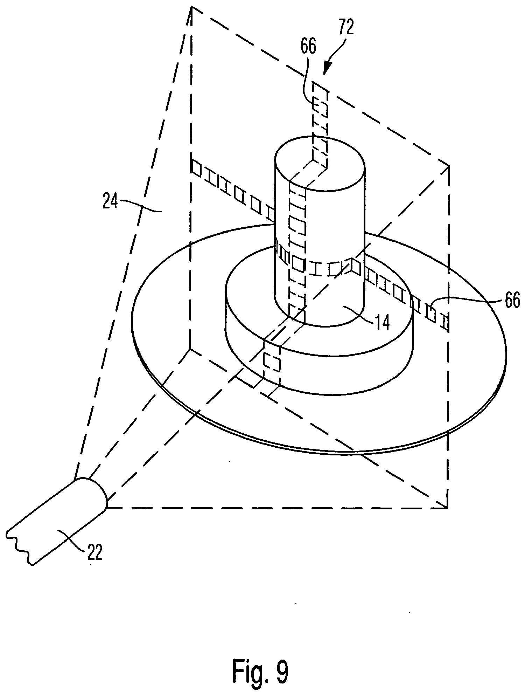

Die Ausführungsform gemäß Fig. 9 entspricht der Ausführungsform der Fig. 8, wobei jedoch anstelle der zweiten vertikalen Position eine horizontale Erfassungsposition 72 realisiert ist. Durch die Erfassung der entsprechenden Pixel 66 lässt sich auch die Höhe der Muffel 14 bestimmen.

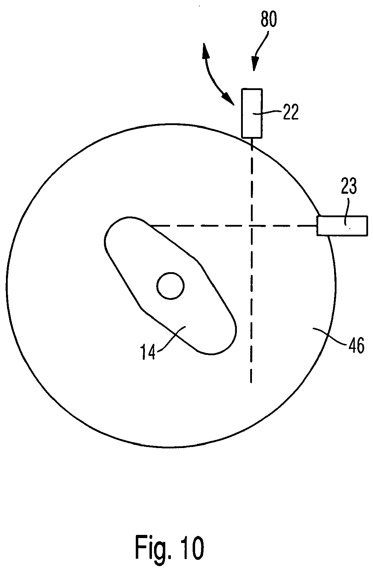

Auch nicht-kreisförmige Muffeln lassen sich erfassen, wie bei der Ausführungsform der Muffel 14 gemäß Fig. 10. Auch bei dieser Ausführungsform kommen zwei optische Sensoren 22 und 23 zum Einsatz, wobei einer der optischen Sensoren um eine vertikale Achse 80 schwenkbar gelagert ist.

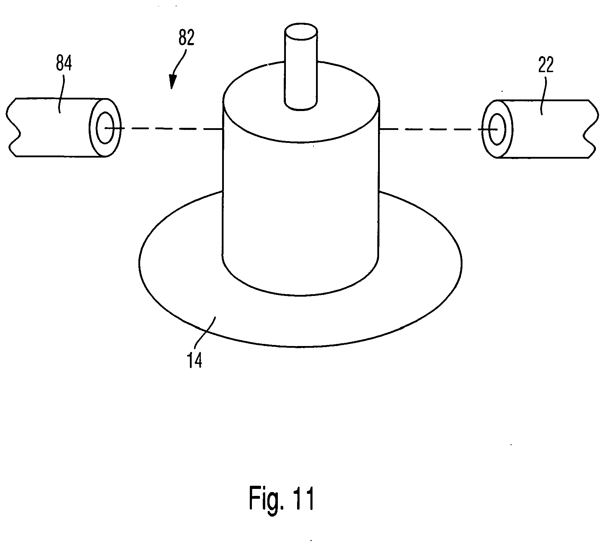

Eine Erfassung einer Muffelgröße über eine Lichtschranke 82 ist in Fig. 11 dargestellt. Die Lichtschranke weist einen Sender 84 und den optischen Sensor 22 als Empfänger auf. Die Lichtschranke 82 kann beispielsweise stationär verbleiben und dann erfassen, ob eine Muffel eingesetzt ist oder nicht. Erfindungsgemäß lässt sich die Lichtschranke 82 in horizontaler Richtung verfahren, und es wird anhand des Fahrwegs, der erforderlich ist, damit von dem Sender 84 emittierte Strahlung nach Abdeckung durch die Muffel 14 wieder auf den optischen Sensor 22 fällt, erfasst, wie groß der Muffeldurchmesser ist.

## Patentansprüche

1. Dentalofen, mit einem Ofenkopf (54) und einem Brennraumboden (12), der für die Aufnahme eines Dentalrestaurationsteils geeignet ist, wobei wenigstens ein optischer Sensor (22) an den Dentalofen (10) oder in dessen Nähe angeordnet ist, der einen Ausgangsanschluss (26) aufweist, der an einer Auswertevorrichtung für das Auswerten des Dentalrestaurationsteils (40) und/oder einer Muffel (14) und/oder eines Presskolbens (52) und/oder eines Brenngutträgers hinsichtlich seiner Abmessung und/oder seiner Form und/oder seiner Position angeschlossen ist, wobei eine verfahrbare Lichtschranke (82) vorgesehen ist, die einen Sender (84) und den optischen Sensor (22) als Empfänger aufweist, so dass von dem Sender (84) emittierte Strahlung nach Abdeckung durch das Dentalrestaurationsteil (40) oder die Muffel (14) wieder auf den optischen Sensor (22) fällt, wobei der optische Sensor (22) an eine Steuervorrichtung (28) angeschlossen ist, über welche das Dentalrestaurationsteil (40) oder die Muffel (14) hinsichtlich seiner Größe erkennbar ist, und wobei die Steuervorrichtung (28) Ofenparameter in Abhängigkeit von der Größe des Dentalrestaurationsteils (40), insbesondere von der so erfassten Muffelbreite festlegt.

2. Dentalofen nach Anspruch 1, **dadurch gekennzeichnet, dass** die Auswertevorrichtung mit einer Anzeigevorrichtung (58) verbunden ist, mit welcher Informationen über die Abmessung und/oder die Form und/oder Position anzeigbar sind, und/oder mit der Steuervorrichtung (28) für die Steuerung des Dentalofens.

3. Dentalofen nach Anspruch 1 oder 2, **dadurch gekennzeichnet, dass** eine Überwachungsvorrichtung des Dentalofens (10) an den Sensor (22) angeschlossen ist, mit welcher eine zeitliche Veränderung der Abmessung und/oder Form und/oder Position erfassbar ist.

4. Dentalofen nach einem der vorhergehenden Ansprüche, **dadurch gekennzeichnet, dass** der Sensor (22) einen Erfassungsbereich (24) aufweist, der sich mindestens teilweise im Brennraum (16) oberhalb des Brennraumbodens (12) des Dentalofens (10) erstreckt und durch den sich insbesondere auch die Mittellängsachse des Brennraums (16) erstreckt.

5. Dentalofen nach einem der vorhergehenden Ansprüche, **dadurch gekennzeichnet, dass** der Ofenkopf (54) in an sich bekannter Weise von dem Brennraumboden (12) entfernbar, insbesondere gegenüber diesem anhebbar ist und der Sensor (22) auf einen Erfassungsbereich (24) gerichtet ist, der sich zwischen dem Brennraumboden (12) und dem Ofenkopf im geöffneten Zustand des Ofens erstreckt.

6. Dentalofen nach einem der vorhergehenden Ansprüche, **dadurch gekennzeichnet, dass** der Sensor (22) schwenkbar gelagert ist, insbesondere schwenkbar an dem Dentalofen (10) befestigt ist.

7. Dentalofen nach einem der vorhergehenden Ansprüche, **dadurch gekennzeichnet, dass** der Sensor (22) als Bilderfassungsvorrichtung ausgebildet ist, mit welcher ein Bild der Dentalrestaurationen (40) und/oder der Muffel (14) und/oder des Presskolbens (52) und/oder des Brenngutträgers aufnehmbar ist.

8. Dentalofen nach einem der Ansprüche 1 bis 6, **dadurch gekennzeichnet, dass** der Sensor (22) als Bilderfassungsvorrichtung ausgebildet ist, die das aufgenommene Bild zeilenweise und/oder spaltenweise auswertet und basierend auf dem Auswertungsergebnis in einer parallel zum Brennraumboden (12) verlaufenden Breite oder einer vertikal zum Brennraumboden verlaufenden Höhe des Dentalrestaurationsteils (40) und/oder der Muffel (14) und/oder des Presskolbens (52) und/oder des Brenngutträgers deren Abmessungen bestimmt, insbesondere durch Bestimmung der Anzahl von Pixeln, die der Breite bzw. Höhe des erfassten Gegenstands entsprechen, wobei die Anzahl der Pixel durch Vergleich der dem Gegenstand entsprechenden Pixel gegenüber den dem Hintergrund entsprechenden Pixeln basierend auf einem vorgegebenen Kriterium realisiert ist.

9. Dentalofen nach Anspruch 8, **dadurch gekennzeichnet, dass** es sich bei dem angesprochenen Kriterium um die Temperatur, die Helligkeit und/oder die Farbe des Gegenstandes handelt.

10. Dentalofen nach einem der vorhergehenden Ansprüche, **dadurch gekennzeichnet, dass** der Sensor (22) elektromagnetische Wellen in einem Wellenlängenbereich zwischen 380 nm und 18 µm erfasst und insbesondere eine Vielzahl von Sensorelementen aufweist.

11. Dentalofen nach einem der vorhergehenden Ansprüche, **dadurch gekennzeichnet, dass** der optische Sensor (22) wenigstens zwei Sensorelemente aufweist, die im Winkel zueinander versetzt angeordnet sind und insbesondere je Erfassungsbereiche (24) aufweisen, die einander mindestens teilweise überlappen.

12. Dentalofen nach Anspruch 1, **dadurch gekennzeichnet, dass** die Lichtschranke (82) mindestens zwei Sensorelemente aufweist und mindestens einen Sender elektromagnetischer Strahlen, dessen Vorhandensein von den Sensorelementen erfassbar ist.

13. Verfahren zum Betrieb eines Dentalofens, welcher Dentalofen einen Ofenkopf (54) und einen Brennraumboden (12) aufweist, der für die Aufnahme eines Dentalrestaurationsteils geeignet ist, wobei wenigstens ein optischer Sensor (22) an dem Dentalofen (10) oder in dessen Nähe angeordnet ist, welcher ein Bild der Dentalrestauration (40) und/oder der Muffel (14) und/oder eines Presskolbens (52) und/oder eines Brenngutträgers aufnimmt und an eine Steuervorrichtung (28) weiterleitet, und dass basierend hierauf der Dentalofen (10) gesteuert und vorzugsweise auch das Bild angezeigt wird, wobei die Steuerung eine Vorauswahl an Bearbeitungsprogrammen des Dentalofens (10) umfasst, nachdem die Steuervorrichtung (28) das erfasste Dentalrestaurationsteil (40) und/oder die erfasste Muffel (14) erkannt hat, **dadurch gekennzeichnet dass** das Dentalrestaurationsteil und/oder die Muffel (14) mit einer verfahrbaren Lichtschranke (82) erfasst wird, die einen Sender (84) und den optischen Sensor (22) als Empfänger aufweist, so dass von dem Sender (84) emittierte Strahlung nach Abdeckung wieder auf den optischen Sensor (22) fällt.

14. Verfahren nach Anspruch 13, **dadurch gekennzeichnet, dass** die Steuerung eine Vorauswahl an Bearbeitungsprogrammen des Dentalofens (10) umfasst, nachdem die Steuervorrichtung (28) die Größe einer auf dem Brennraumboden (12) abgestellten Muffel (14) erkannt hat.

15. Verfahren nach Anspruch 13 oder 14, **dadurch gekennzeichnet, dass** die Temperatur des Dentalrestaurationsteils (40) und/oder der Muffel (14) und/oder des Presskolbens (52) und/oder des Brenngutträgers von dem Sensor (22) erfasst wird und die Steuervorrichtung (28) den Dentalofen (10) in Abhängigkeit von der erfassten Temperatur steuert.

## Claims

1. A dental furnace, comprising a furnace head (54) and a firing chamber base (12) which is adapted for receiving a dental restoration part, wherein at least one optical sensor (22) is arranged on the dental furnace (10) or in the vicinity thereof, the dental furnace having an output connection (26) which is connected to an analyzing device for analyzing the dental restoration part (40) and/or a muffle (14) and/or a press plunger (52) and/or a firing tray with respect to dimension and/or shape and/or position thereof,
wherein
a movable light barrier (82) is provided, which comprises a transmitter (84) and the optical sensor (22) as a receiver, so that radiation emitted by the transmitter (84) is returned to the optical sensor (22) after being covered by the dental restoration part (40) or the muffle (14), wherein the optical sensor (22) is connected to a control device (28), which can be used for the dental restoration part (40) or the muffle (14) to be recognizable in regard to its size, and wherein the control device (28) determines furnace parameters depending on the size of the dental restoration part (40), in particular depending on the muffle width recognized therewith.

2. The dental furnace according to claim 1, **characterized in that** the analyzing device is connected to a display device (58), which can be used to display information on the dimension and/or the shape and/or position, and/or to the control device (28) for controlling the dental furnace.

3. The dental furnace according to claim 1 or 2, **characterized in that** a monitoring device of the dental furnace (10) is connected to the sensor (22), wich can be used to recognize a change over time of the dimension and/or shape and/or position.

4. The dental furnace according to one of the preceding claims, **characterized In that** the sensor (22) comprises a recognition region (24) which extends at least partially in the combustion chamber (16) above the combustion chamber floor (12) of the dental furnace (10) and through which in particular also the central longitudinal axis of the combustion chamber (16) extends.

5. The dental furnace according to one of the preceding claims, **characterized in that** the furnace head (54) can be removed from the firing chamber floor (12) in a manner known per se, in particular can be raised in relation therto, and the sensor (22) Is directed towards a recognition area (24) which extends between the firing chamber floor (12) and the furnace head In the state of the furnace beeing open.

6. The dental furnace according to one of the preceding claims, **characterized in that** the sensor (22) is pivotally mounted, in particular is pivotally attached to the dental furnace (10).

7. The dental furnace according to one of the preceding claims, **characterized in that** the sensor (22) is designed as an image-capturing device which can be used to record an image of the dental restorations (40) and/or the muffle (14) and/or the press plunger (52) and/or the firing tray.

8. The dental furnace according to any one of claims 1 to 6, **characterized in that** the sensor (22) is designed as an Image-capturing device which analyzes the captured image line by line and/or column by column and, based on the analyzing result, determines the dimensions of the dental restoration part (40) arid/or the muffle (14) and/or the press piston (52) and/or the firing tray in a width running parallel to the firing chamber floor (12) or in a height running vertically to the firing chamber floor, in particular by determining the number of pixels which correspond to the width or the height of the detected object, the number of pixels being realized by comparing the pixels corresponding to the object with the pixels corresponding to the background based on a predetermined criterion.

9. The dental furnace according to claim 8, **characterized in that** the respective criterion is the temperature, brightness and/or colour of the object.

10. The dental furnace according to one of the preceding claims, **characterized In that** the sensor (22) detects electromagnetic waves in a wavelength range between 380 nm and 18 µm and in particular comprises a plurality of sensor elements.

11. The dental furnace according to one of the preceding claims, **characterized in that** the optical sensor (22) comprises at least two sensor elements which are arranged offset to each other by an angle, and in particular each of which comprises recognition areas (24) which at least partially overlap each other.

12. The dental furnace according to claim 1, **characterized In that** the optical sensor (82) comprises at least two sensor elements and at least one transmitter of electromagnetic rays, the presence of which can be detected by the sensor elements.

13. A method for operating a dental furnace, which dental furnace comprises a furnace head (54) and a firing chamber floor (12) which Is suitable for receiving a dental restoration part, wherein at least one optical sensor (22) is arranged on the dental furnace (10) or in the vicinity thereof, which detects an image of the dental restoration (40) and/or of the muffle (14) and/or of a press piston (52) and/or of a firing tray and transmits it to a control device (28), such that based thereon, the dental furnace (10) is controlled and preferably the image is also displayed,
wherein
the control comprises a preselection of processing programs of the dental furnace (10) after the control device (28) has recognized the detected dental restoration part (40) and/or the detected muffle (14), **characterized in that** the dental restoration part and/or the muffle (14) is detected using a movable light barrier (82) which comprises a transmitter (84) and the optical sensor (22) as a receiver, such that radiation emitted from the transmitter (84) will be returned onto the optical sensor (22) after It has been covered.

14. The method according to claim 13, **characterized In that** the control device (28) comprises a preselection of operation programs of the dental furnace (10) after the control device (28) has detected the size of a muffle (14) placed on the combustion chamber floor (12).

15. The method according to claim 13 or 14, **characterized in that** the temperature of the dental restoration part (40) and/or the muffle (14) and/or the press plunger (52) and/or the firing tray is detected by the sensor (22) and the control device (28) controls the dental furnace (10) depending on the temperature detected.

## Revendications

1. Four dentaire, avec une tête de four (54) et un fond de chambre de combustion (12) qui est adapté pour recevoir une pièce de restauration dentaire, où au moins un capteur optique (22) est disposé sur le four dentaire (10) ou à proximité de celui-ci, qui présente une connexion de sortie (26), qui est reliée à un dispositif d'évaluation pour évaluer la pièce de restauration dentaire (40) et/ou à un moufle (14) et/ou à un piston de pression (52) et/ou à un support de cuisson en ce qui concerne sa dimension et/ou sa forme et/ou sa position, où une barrière lumineuse mobile (82) est prévue, qui présente un émetteur (84) et le capteur optique (22) comme récepteur, de manière que le rayonnement émis par l'émetteur (84) après avoir été recouvert par la pièce de restauration dentaire (40) ou le moufle (14) retombe sur le capteur optique (22), le capteur optique (22) est relié à un dispositif de commande (28), par lequel la pièce de restauration dentaire (40) ou le moufle (14) peuvent être reconnus en ce qui concerne leur taille, et où le dispositif de commande (28) détermine les paramètres du four en fonction de la taille de la pièce de restauration dentaire (40), en particulier de la largeur du moufle ainsi détectée.

2. Four dentaire selon la revendication 1, **caractérisé en ce que** le dispositif d'évaluation est relié à un dispositif d'affichage (58) avec lequel des informations sur la dimension et/ou la forme et/ou la position peuvent être affichées, et/ou avec le dispositif de commande (28) pour la commandé du four dentaire.

3. Four dentaire selon la revendication 1 ou 2, **caractérisé en ce qu'**un dispositif de surveillance du four dentaire (10) est relié au capteur (22), avec lequel un changement temporel de la dimension et/ou de la forme et/ou de la position est détectable.

4. Four dentaire selon l'une des revendications précédentes, **caractérisé en ce que** le capteur (22) présente une gamme de détection (24) qui s'étend au moins partiellement dans la chambre de combustion (16) au-dessus du fond de la chambre de combustion (12) du four dentaire (10) et par lequel en particulier l'axe longitudinal central de la chambre de combustion (16) s'étend aussi.

5. Four dentaire selon l'une des revendications précédentes, **caractérisé en ce que** la tête de four (54) de manière en soi connue peut être éloignée du fond de la chambre de combustion (12), en particulier peut être soulevée de celui-ci et le capteur (22) est dirigé vers une zone de détection (24) qui s'étend entre le fond de la chambre de combustion (12) et la tête de four à l'état ouvert du four.

6. Le four dentaire selon l'une des revendications précédentes, **caractérisé en ce que** le capteur (22) est monté de manière pivotant, en particulier est attaché de manière pivotant au four dentaire (10).

7. Four dentaire selon l'une des revendications précédentes, **caractérisé en ce que** le capteur (22) est conçu comme un dispositif d'acquisition d'image, avec lequel une image des restaurations dentaires (40) et/ou du moufle (14) et/ou du piston de pression (52) et/ou du support de cuisson peut être enregistrée.

8. Four dentaire selon l'une des revendications 1 à 6, **caractérisé en ce que** le capteur (22) est conçu comme un dispositif d'acquisition d'image, qui évalue l'image acquise ligne par ligne et/ou colonne par colonne et qui, sur la base du résultat de l'évaluation, détermine les dimensions de la pièce de restauration dentaire (40) et/ou du moufle (14) et/ou du piston de pression (52) et/ou du support de cuisson dans une largeur qui s'étend parallèlement au fond de la chambre de combustion (12) ou dans une hauteur qui s'étend verticalement à la hauteur du fond de la chambre de combustion, en particulier en déterminant le nombre de pixels correspondant à la largeur ou à la hauteur de l'objet détecté, où le nombre de pixels est réalisé en comparant les pixels correspondant à l'objet par rapport aux pixels correspondant à l'arrière-plan sur la base d'un critère prédéterminé.

9. Four dentaire selon la revendication 8, **caractérisé en ce que** le critère visé est la température, la luminosité et/ou la couleur de l'objet.

10. Four dentaire selon l'une des revendications précédentes, **caractérisée en ce que** le capteur (22) détecte les ondes électromagnétiques dans une plage de longueur d'onde comprise entre 380 nm et 18 µm et présente en particulier une pluralité d'éléments de détection.

11. Le four dentaire selon l'une des revendications précédentes, **caractérisé en ce que** le capteur optique (22) présente au moins deux éléments de détection, qui sont disposés de manière décalée en angle l'un par rapport à l'autre et présentent en particulier chacun des zones de détection (24) qui se chevauchent au moins partiellement.

12. Four dentaire selon la revendication 1, **caractérisé en ce que** la barrière lumineuse (82) présente au moins deux éléments de détection et au moins un émetteur de rayons électromagnétiques, dont la présence est détectable par les éléments du détection.

13. Procédé pour faire fonctionner un four dentaire, qui présente une tête de four (54) et un fond de chambre à combustion (12) adaptés pour la réception d'une pièce de restauration dentaire, où au moins un capteur optique (22) est disposé sur le four dentaire (10) ou à proximité de celui-ci, qui enregistre une image de la restauration dentaire (40) et/ou du moufle (14) et/ou d'un piston de pression (52) et/ou d'un support de cuisson et la transmet à un dispositif de commande (28) et que sur cette base le four dentaire (10) est commandé et de préférence l'image est aussi affichée, où la commande comprend une présélection des programmes de traitement du four dentaire (10) après que le dispositif de commande (28) a détecté la pièce de restauration dentaire détectée (40) et/ou le moufle détecté (14), **caractérisé en ce que** la pièce de restauration dentaire et/ou le moufle (14) est détecté avec une barrière lumineuse mobile (82) qui présente un émetteur (84) et le capteur optique (22) comme récepteur, de sorte que le rayonnement émis par l'émetteur (84) après avoir été recouvert retombe sur le capteur optique (22).

14. Procédé selon la revendication 13, **caractérisé en ce que** la commande comprend une présélection de programmes de traitement du four dentaire (10) après que le dispositif de commande (28) a détecté la taille d'un moufle (14) placé sur le fond de la chambre de combustion (12).

15. Procédé selon la revendication 13 ou 14, **caractérisé en ce que** la température de la pièce de restauration dentaire (40) et/ou du moufle (14) et/ou du piston de pression (52) et/ou du support de cuisson est détectée par le capteur (22) et le dispositif de commande (28) commande le four dentaire (10) en fonction de la température détectée.
